# EUROPEAN PATENT APPLICATION

(11) **EP 2 981 122 A1**
(43) Date of publication of application: **03.02.2016**
(21) Application number: 14775901.3
(22) Date of filing: 27.02.2014
(51) Int. Cl.: H04W 24/02, H04L 12/70, H04W 8/20, H04W 80/10, H04W 92/16

(54) **INFORMATION PROCESSING SYSTEM**

(30) Priority: 27.03.2013 JP 2013066709
(71) Applicant: NEC Corporation, Tokyo 108-8001 (JP)
(72) Inventor: OOHIRA, Mayo, Tokyo 108-8001 (JP); YOSHIKAWA, Naoya, Tokyo 108-8001 (JP)
(74) Representative: Betten & Resch
(86) International application number: PCT/JP2014/001040
(87) International publication number: WO 2014/155968

(57) **Abstract**

Included are: connection control devices each of which establishes a connection between terminal devices; an information transfer device that receives connection request information from a terminal device and transmits the received connection request information to a connection control device associated in advance with the user information of the user operating the terminal device; and a system management device that detects the addition of a connection control device. When having detected the addition of the connection control device, the system management device selects, on the basis of a predetermined user selection condition, the user information of the user to be associated with the added connection control device, and instructs the information transfer device to store the selected user information and the information of the added connection control device with the former associated with the latter.

## Description

### Technical Field

The present invention relates to an information processing system, particularly, relating to an information processing system that provides services to user terminals that are connected via an Internet Protocol (IP) network.

### Background Art

Recently, in mobile communication networks, with improvement in the speed of terminals and diversification in services and users, communication traffic has been increasing. Besides, successive provision of a variety of new services makes an environment where a variety of demands on traffic change rapidly. Further, at a time of a large-scale disaster, service requests explosively increase, traffic rapidly increases, thereby making hard to predict the demands for the services.

IP (Internet Protocol) Multimedia Subsystem (IMS) technique has been known as a core technology of a mobile communication network (for example, refer to PTL 1). For example, in an IMS, a Serving-Call Session Control Function (S-CSCF) server receives a SIP message that was transmitted from a terminal device of a user via a Proxy-CSCF (P-CSCF) server that is connected with the terminal device and establishes a session based on the SIP message so as to provide a variety of services. In cases of construction, addition, or relocation of this IMS, an administrator of the IMS prepares hardware, installs an application, and performs a variety of settings to start the operation of the IMS.

Under such an environment, the IMS as the core technology of a mobile communication network is required to flexibly change communication processing performance in accordance with a rapid change in the communication traffic demands.

### Citation List

### Patent Literature

PTL 1: Unexamined Japanese Patent Application Publication No. 2009-302633

### Technical Problem

Here, in order to respond such a rapid change in communication traffic demands, there can be considered flexibly changing the configuration of the IMS (for example, addition of a S-CSCF server) using a virtualization technology. By realizing addition of the system within a short time using a virtualization technology, even in an environment where there is a rapid change in communication traffic demands, a flexible change of the configuration is made possible in response to the rapid increase in the communication traffic demands using limited physical resources.

Meanwhile, in an IMS, if a user is registered, a terminal device that is operated by the user and a S-CSCF server that provides a service to the user are associated and stored in the P-CSCF server. Then, the P-CSCF server connects between the terminal device and the S-CSCF server based on information that has already been stored. As such, for example, even if a S-CSCF server is added, the added S-CSCF server cannot receive SIP messages transmitted from a terminal device via the P-CSCF server. That results in a problem where the added server cannot be immediately put in use and a rapid change in traffic demands cannot be responded.

As such, the objective of the present invention is to provide an information processing system that can solve the above-described problem of not being able to respond a rapid change in traffic demands.

### Solution to Problem

To achieve such an objective, the information processing system as an embodiment of the present invention includes:
connection control devices, each of which establishes a connection between terminal devices;
an information transfer device that receives connection request information from a terminal device and transmits the received connection request information to a connection control device that is associated in advance with user information of a user operating the terminal device; and a system management device that detects addition of the connection control device,
wherein, when having detected the addition of the connection control device, the system management device selects user information of a user to be associated with the added connection control device based on a preset user selection condition and instructs the information transfer device to store the selected user information and information of the added connection control device in association with each other.

Further, an information processing device as another embodiment of the present invention includes:
system management means that detects addition of a connection control device that establishes a connection between terminal devices, wherein, when having detected the addition of the connection control device, the system management means selects user information of a user to be associated with the added connection control device based on a preset user selection condition and instructs an information transfer device,
which transfers information between the terminal devices and the connection control device, to store the selected user information and information of the added connection control device in association with each other.

Further, an information processing method as another embodiment of the present invention includes:
when addition of a connection control device that establishes a connection between terminal devices has been detected, selecting user information of a user to be associated with the added connection control device based on a preset user selection condition and instructing an information transfer device, which transfers information between the terminal devices and the connection control device, to store the selected user information and information of the added connection control device in association with each other.

Further, a program as another embodiment of the present invention causes an information processing device to realize system management means that detects addition of a connection control device that establishes a connection between terminal devices,
wherein, when having detected the addition of the connection control device, the system management means selects user information of a user to be associated with the added connection control device based on a preset user selection condition and instructs an information transfer device, which transfers information between the terminal devices and the connection control device, to store the selected user information and information of the added connection control device in association with each other.

### Advantageous Effects of Invention

Having a configuration as described above, the present invention can respond to a rapid change in traffic demands.

### Brief Description of Drawings

Fig. 1 is a block diagram showing a configuration of an information processing system according to a first exemplary embodiment of the present invention.
Fig. 2 is a diagram for illustrating an example of establishing a session.
Fig. 3 is a diagram for illustrating an example of adding a S-CSCF server.
Fig. 4 is a diagram for illustrating user information relocation processing.
Fig. 5 is a sequence diagram for illustrating user registration processing.
Fig. 6 is a sequence diagram for illustrating session establishment processing.
Fig. 7 is a sequence diagram for illustrating user relocation processing.
Fig. 8 is a sequence diagram for illustrating user relocation processing.
Fig. 9 is a flowchart for illustrating relocation user selection processing.
FIG. 10 is a block diagram showing a configuration of an information processing system according to a second exemplary embodiment of the present invention.

### Description of Embodiments

### <First Exemplary Embodiment>

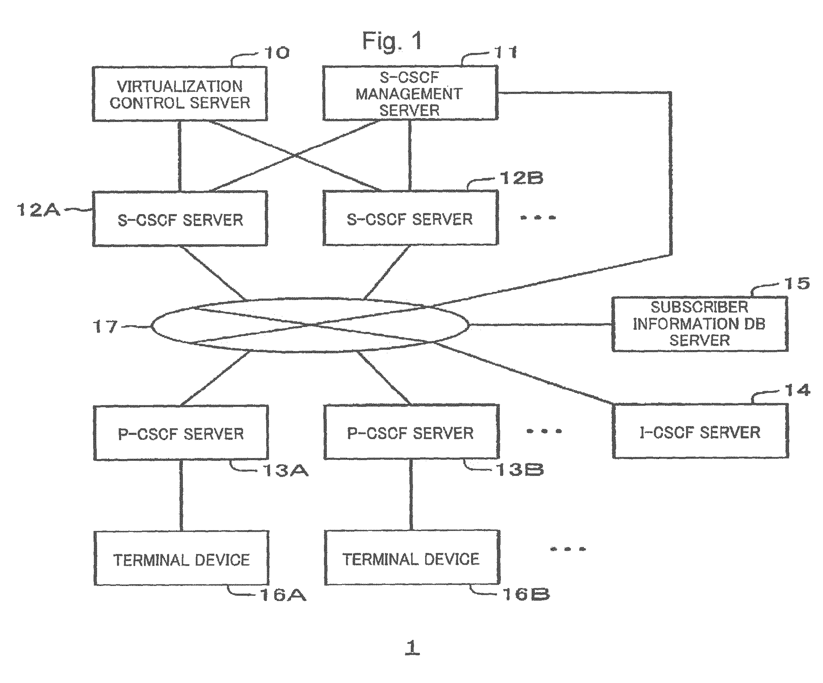

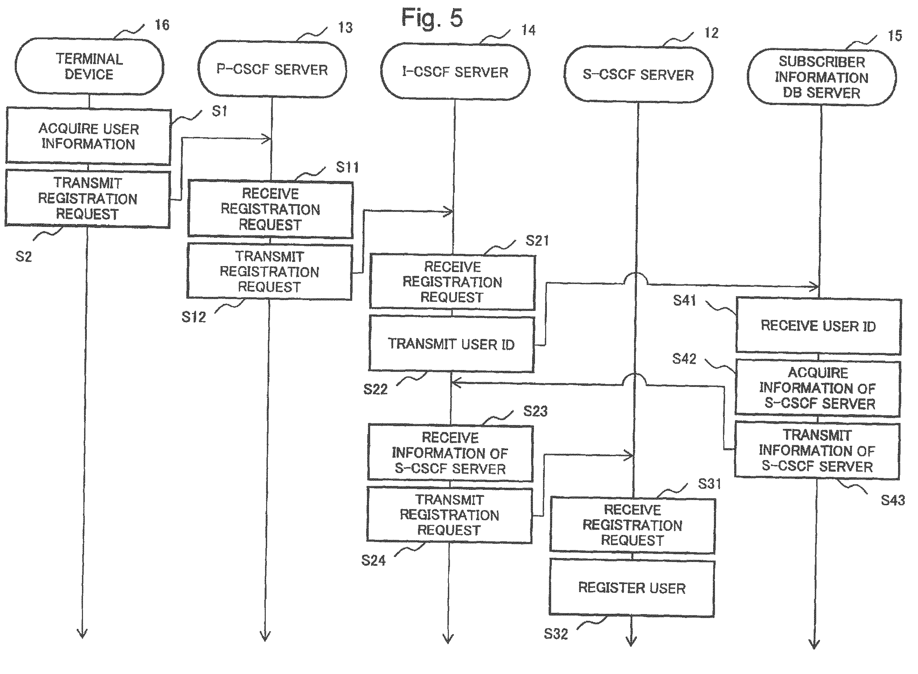

The following will describe the first exemplary embodiment of the present invention with reference to Figs. 1 to 9. Figs. 1 to 4 are diagrams for illustrating a configuration of an information processing system of the first exemplary embodiment. Figs. 5 to 9 are diagrams for illustrating operation of the information processing system.

### (Configuration)

Fig. 1 is a diagram showing an overview of an information processing system 1 that realizes an IMS (IP (Internet Protocol) Multimedia Subsystem). The IMS is communication specifications for implementing a multi-media service where services that are performed in a fixed network, a mobile communication, a broadcast and the like are provided via an IP network. The information processing system 1 of Fig. 1 includes: a virtualization control server 10; a S-CSCF (Serving-Call Session Control Function) management server 11 (a system management device); S-CSCF 12A, 12B ... (connection control devices) (hereinafter, referred to as the S-CSCF server 12. The same applies to other components); P-CSCF (Proxy-CSCF) servers 13A, 13B ... (information transfer devices); an Interrogating-CSCF (I-CSCF) server 14; a subscriber information DB server 15; terminal devices 16A, 16B ...; and a network 17. It should be noted that there may be three or more S-CSCF servers 12, P-CSCF servers 13, and terminal devices 16, respectively. Further, in the same way, there may be two or more I-CSCF servers 14 and subscriber information DB servers 15.

The terminal device 16 is a mobile terminal, such as a portable telephone. A user (a subscriber of a network service) can use a variety of multi-media services that are provided from an application server and the like by using the terminal device 16. When a user uses the above-described multi-media service, a session is established with the terminal device 16 via the three Session Initiation Protocol (SIP) servers, that is, the S-CSCF server 12, the P-CSCF server 13, and the I-CSCF server 14.

The subscriber information DB server 15 is, for example, a Home Subscriber Server (HSS) which stores user (subscriber) information, authentication information, and the like. The user information, for example, includes identification information of the S-CSCF server 12 that is used by the user, information for connecting with the S-CSCF server 12 (for example, a URL (Uniform Resource Locator)), and the like.

The P-CSCF server 13 is a SIP server that is connected with the terminal device 16. The P-CSCF server 13 receives a SIP message from the terminal device 16 and transfers the SIP message to the I-CSCF server 14 or S-CSCF server 12. Further, the P-CSCF server 13 transfers the SIP message that was transmitted from the I-CSCF server 14 or S-CSCF server 12 to the terminal device 16.

The I-CSCF server 14 receives the SIP message from the P-CSCF server 13. Then, the I-CSCF server 14 acquires the S-CSCF server 12 that is associated with the identification information of the user who operates the terminal device 16 based on the identification information of the user included in the received SIP message and user information that has been stored in advance in the subscriber information DB server 15. Thereafter, the I-CSCF server 14 transfers the SIP message to the S-CSCF server 12.

The S-CSCF server 12 is configured by, for example, a virtual machine that is generated (activated) by a virtualization control server 10. The S-CSCF server 12 is a SIP server that performs user authentication and session control and provides a variety of multi-media services used by a user by connecting with an application server (not shown). When having received the SIP message from the P-CSCF server 13 or I-CSCF server 14, the S-CSCF server 12 performs user authentication processing and, thereafter, establishes a session (establishes a connection between the terminal devices 16). It should be noted that the S-CSCF server 12 may be configured by a physical server device without limitation to a virtual machine.

Here, the following will describe processing for registering a user for a service implemented by an IMS. It should be noted that the user registration processing as will be described below is only an example, and user registration processing in an IMS is not limited to the following example. First, for a user to subscribe the service, the terminal device 16 acquires user information. The user information is, for example, a user ID (identification) for identifying a user who operates the terminal device 16, a password for authentication of the user, an IP address of the terminal device 16, and the like. Next, the terminal device 16 transmits a registration request that includes the acquired user information. The registration request is, for example, a SIP message, such as a REGISTER request message.

Next, the P-CSCF server 13 that is located within a network identical to the network where the terminal device 16 is located receives a registration request from the terminal device 16. Then, the P-CSCF server 13 acquires information indicating the S-CSCF server 12 that is associated with the user ID included in the registration request based on the information that associates the user (or the terminal device 16) and the S-CSCF server 12 that has been stored in advance in the storage unit of its own and the received registration request. It should be noted that, if the user has not yet been registered, the above processing will be omitted, and the P-CSCF server 13 transfers the registration request that was received from the terminal device 16 to the I-CSCF server 14.

Subsequently, the I-CSCF server 14 receives the registration request that was transferred (transmitted) from the P-CSCF server 13. Next, the I-CSCF server 14 transmits the user ID included in the registration request to the subscriber information DB server 15 and acquires information of the S-CSCF server 12 that is associated with the user ID. Specifically, when having received the user ID from the I-CSCF server 14, the subscriber information DB server 15 acquires information of the S-CSCF server 12 that is associated with the user ID. Then, the subscriber information DB server 15 transmits the acquired information of the S-CSCF server 12 to the I-CSCF server 14. The information of the S-CSCF server 12 is information for connecting with the S-CSCF server 12, such as a URL.

It should be noted that, if information of the S-CSCF server 12 that is associated with the user ID is not stored in the subscriber information DB server 15, the I-CSCF server 14 selects a predetermined S-CSCF server 12 by a preset selection method. Then, the I-CSCF server 14 acquires information of the selected S-CSCF server 12. For example, the I-CSCF server 14 can provide a service desired by a user and selects the S-CSCF server 12 that is located at the closest location to the terminal device 16 operated by the user. Then, the I-CSCF server 14, for example, acquires the information of the S-CSCF server 12 from the storage unit of its own or the subscriber information DB server 15.

Subsequently, the I-CSCF server 14 transmits the registration request to the S-CSCF server 12 based on the acquired information of the S-CSCF server 12. Then, the S-CSCF server 12 receives the registration request and registers the user based on the user information included in the registration request. Specifically, the S-CSCF server 12 stores user registration information that associates information that indicates the S-CSCF server 12 itself and the user information (for example, a user ID). Next, the S-CSCF server 12 transmits the user registration information to the P-CSCF server 13 and causes the P-CSCF server 13 to store the user registration information. Then, the S-CSCF server 12 transmits an access request to the terminal device 16 via the P-CSCF server 13.

Next, when having received the access request transmitted from the S-CSCF server 12 via the P-CSCF server 13, the terminal device 16 transmits a connection request (connection request information) to the S-CSCF server 12 so as to cause the S-CSCF server 12 to perform authentication processing. The connection request is, for example, a SIP message that includes information and the like of the terminal device 16 of a communication partner. It should be noted that, if information and the like of the terminal device 16 of a communication partner is included in the registration request, the registration request may be transmitted again. Next, the P-CSCF server 13 receives the connection request that was transmitted from the terminal device 16 and acquires information that indicates the S-CSCF server 12 that is associated with (allocated to) the user ID included in the connection request from the storage unit of its own. Then, the P-CSCF server 13 transmits (transfers) a connection request to the S-CSCF server 12 that is indicated by the acquired information.

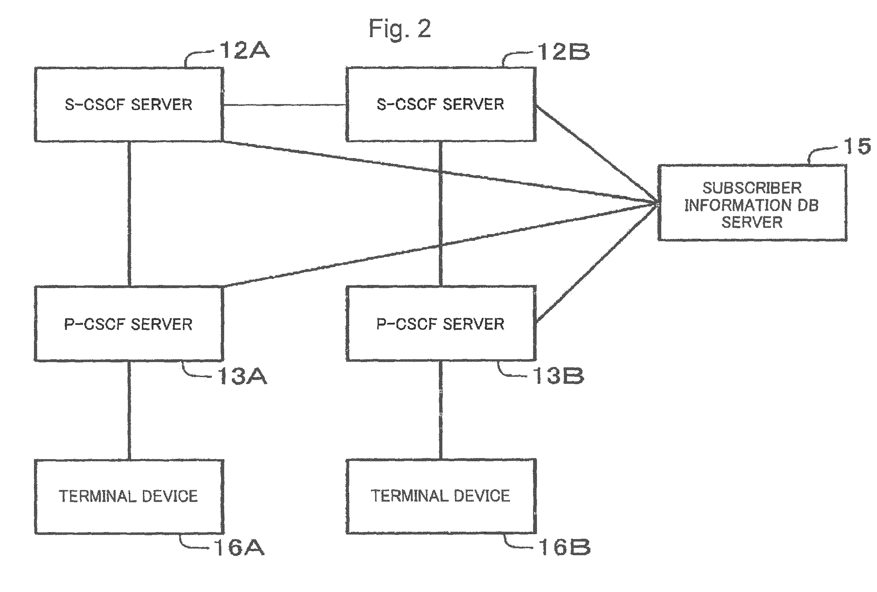

Subsequently, the S-CSCF server 12 receives the connection request transmitted from the P-CSCF server 13 and performs user authentication based on the user information included in the received connection request. Then, if the user authentication is succeeded, the S-CSCF server 12 establishes a session. In this way, for example, as shown in Fig. 2, a session between the terminal device 16A of a calling side and the terminal device 16B of a call-receiving side is established via the P-CSCF servers 13A, 13B and the S-CSCF servers 12A, 12B. As the result, when communicating with other terminal device 16, a user can use a communication service, such as a predetermined application, that the user desires to use.

Next, the following will describe processing of adding a S-CSCF server 12. First, the S-CSCF management server 11 instructs addition of a S-CSCF server 12 to the virtualization control server 10 at a predetermined timing. For example, the S-CSCF management server 11 instructs addition of a S-CSCF server 12 when having detected a predetermined state of the S-CSCF server 12. The predetermined state of the S-CSCF server 12 is, for example, a state where the value of the load of the S-CSCF server 12 is not less than a preset load threshold, a state where a failure occurred to the S-CSCF server 12, a state where the number of users registered in each S-CSCF server 12 is not less than a predetermined number, or the like. For example, the S-CSCF management server 11 determines whether or not the detected load value is not less than a preset load threshold, and, if the value of the load is determined as not less than the load threshold, the S-CSCF management server 11 instructs addition of a S-CSCF server 12 to the virtualization control server 10.

When having received the instruction of the addition of a S-CSCF server 12 from the S-CSCF management server 11, the virtualization control server 10 generates a new virtual S-CSCF server 12. It should be noted that the virtual control server 10 can generate a new S-CSCF server 12 in accordance with an instruction from an administrator or the like of the service.

Then, when having detected completion of addition of a new S-CSCF server 12, the S-CSCF management server 11 selects user information of a user, for whom the new S-CSCF server 12 will perform the processing, based on a preset user selection condition. Then, the S-CSCF server 12 transmits the selected user information to the P-CSCF server 13 and the subscriber information DB server 15, respectively, and causes the P-CSCF server 13 and the subscriber information DB server 15 to store information that associates the new S-CSCF server 12 and the user. It should be noted that, as long as the S-CSCF management server 11 can detect addition of a S-CSCF server 12, detection is not limited to the completion of addition of a new S-CSCF server 12; addition may be detected at starting of the addition. The following will specifically describe the processing of adding the S-CSCF server 12.

Here, the S-CSCF management server 11, at first, detects the state of the S-CSCF server 12. For example, if the state of the S-CSCF server 12 is a load thereof, the S-CSCF management server 11 detects the value of the load of the S-CSCF server 12 and determines whether the detected load value is not less than a preset load threshold. Thus, if the value of the load is determined as not less than the load threshold, the S-CSCF management server 11 instructs addition of a S-CSCF server 12 to the virtualization control server 10.

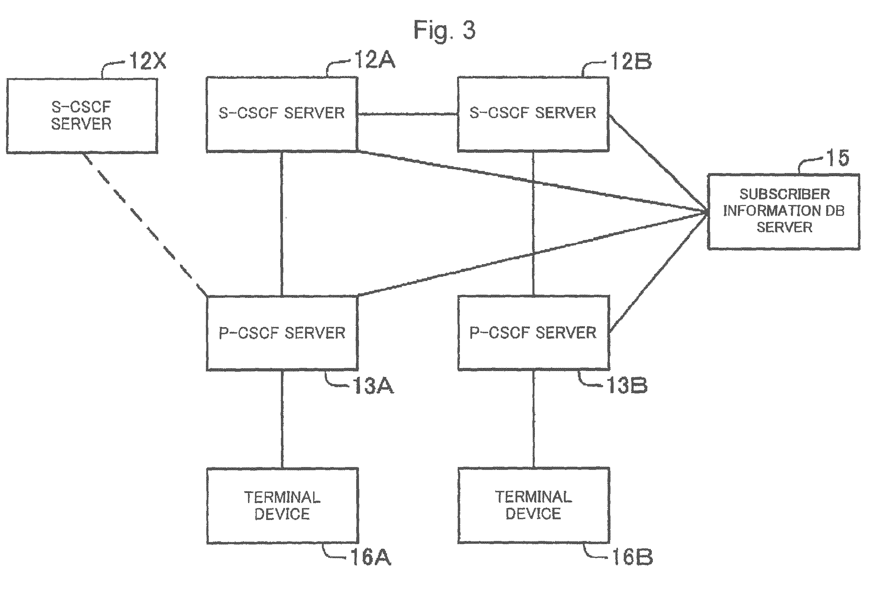

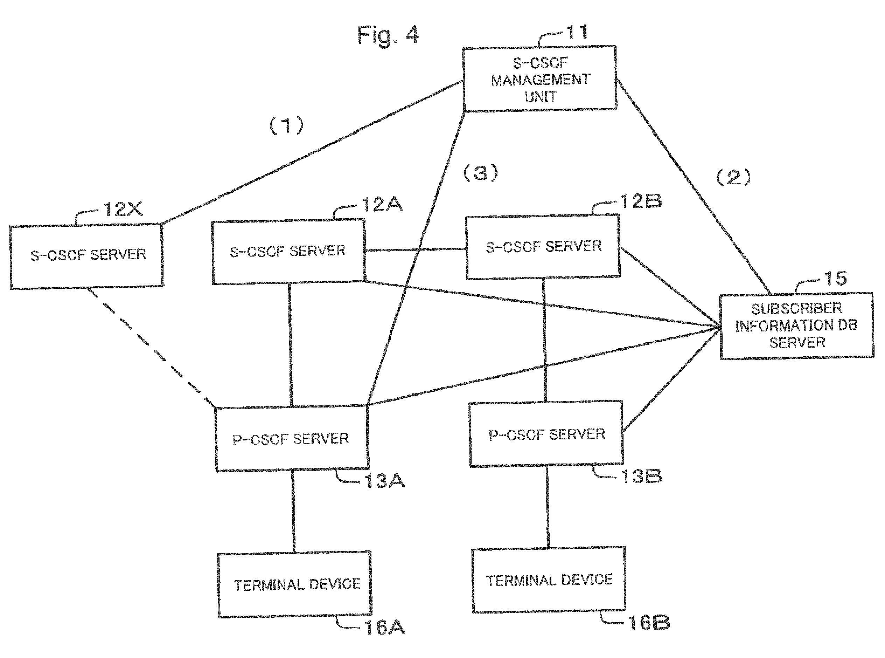

Subsequently, having received the instruction of addition from the S-CSCF management server 11, the virtualization control server 10 starts up a new virtual S-CSCF server 12 (for example, the S-CSCF server 12X of Fig. 3). The S-CSCF management server 11 detects completion of the addition upon starting up of the new S-CSCF server 12 ((1) of Fig. 4). For example, the S-CSCF management server 11 detects completion of the addition when a S-CSCF server 12 is generated in a preset virtualization region. It should be noted that the S-CSCF management server 11 may be configured to detect completion of the addition when having received a notification of completion of generation from the new S-CSCF server 12.

Here, as shown in Fig. 3, in a state where addition of the S-CSCF server 12X has completed, each P-CSCF server 13 has already stored user information that is associated with each S-CSCF server 12. As such, the SIP message that is transmitted from a user (a terminal device 16) indicated by the user information is not transferred to the S-CSCF server 12X. Therefore, the following will describe the processing where the P-CSCF server 13 transfers the SIP message that is received from the terminal device 16 to the S-CSCF server 12X.

In such a case, first, the S-CSCF management server 11 acquires information that identifies the added S-CSCF server 12X as addition server information. This addition server information includes identification information, a URL, and the like of the S-CSCF server 12X. Then, the S-CSCF management server 11 performs relocation user selection processing in which a user to be relocated to the S-CSCF server 12X is selected from users associated with the S-CSCF servers 12A, 23B, ... based on a preset user selection condition.

In the relocation user selection processing, first, the S-CSCF management server 11 acquires user use information (for example, log information) from each S-CSCF server 12. For example, the S-CSCF management server 11 acquires information of a use state (during a session or no session) of a user who uses each S-CSCF server 12, a use count, last use time and date, and the like, as user use information.

Then, the S-CSCF management server 11, first, selects user information (for example, user IDs) of users not in a session based on the acquired user use information. For example, the S-CSCF management server 11 selects user information of users whose use state of the terminal device 16 is "no session" from the user use information, that is, users, with whom a connection with the S-CSCF server 12 (and other terminal device 16) is currently not established. As such, without interrupting provision of a service, processing can be distributed to a plurality of S-CSCF servers 12 so as to respond a rapid change in traffic demands.

Subsequently, from among user information selected by the above processing, the S-CSCF management server 11 selects user information of users whose use count during a predetermined period (a connection count with the S-CSCF server 12) is not less than a use threshold that indicates a preset use count threshold. For example, the S-CSCF management server 11 selects user information of users whose use count during three days (within three days) is twice or more. That is, the S-CSCF management server 11 further selects user information of users whose use count during a predetermined period is not less than a use threshold (that is, frequent users) from among users, with whom a session is not established.

Then, the S-CSCF management server 11 selects user information of a user whose last use time and date of a service (time and date of connection with the S-CSCF server 12) is close to the present time and date (within a predetermined range) from among user information selected in the above processing. For example, the S-CSCF management server 11 selects user information of a user whose last use time and date is within two hours from the present time. That is, the S-CSCF management server 11 selects user information of a user whose last use time and date is within predetermined time from among users whose session is not established and whose use count during a predetermined period is not less than a use threshold. Then, the S-CSCF management server 11 acquires the selected user information as relocation user information. As such, the S-CSCF management server 11 can select a user to be relocated to the added new S-CSCF server 12. As the result, as a user with high possibility of using the service is selected from users who do not use the service, processing can be more efficiently distributed to a plurality of S-CSCF servers 12 so as to respond a rapid change in the traffic demands.

It should be noted that, while an example of three selection conditions (the presence or absence of a session, a use count, and use time and date) has been described as a user selection condition, the S-CSCF management server 11 may select user information of a user so as to satisfy at least one condition. Further, the user selection condition is not limited to the above. The S-CSCF management server 11 may, for example, preset the priority order of relocation for respective users and sequentially select user information of a preset number of users from a user with the highest priority order. Alternatively, the S-CSCF management server 11 may select user information of a preset number of users from a user with the latest last use time and date.

Next, the S-CSCF management server 11 transmits the addition server information that indicates the added S-CSCF server 12 to the subscriber information DB server 15 ((2) of Fig. 4). When having received the addition server information, the subscriber information DB server 15 stores information of the added S-CSCF server 12. For example, the subscriber information DB server 15 creates a new table relating to the added S-CSCF server 12.

Then, the S-CSCF management server 11 transmits the addition server information and relocation user information to the P-CSCF server 13 ((3) of Fig .4). That is, the S-CSCF management server 11 instructs the P-CSCF server 13 to allocate and store user information of the user to be relocated to the newly added S-CSCF server 12, in particular, to store the addition server information and relocation user information in association with each other. When having received the addition server information and relocation user information, the P-CSCF server 13 stores the relocation user information in association with the added S-CSCF server 12. Subsequently, the P-CSCF server 13 notifies the change in user information to the subscriber information DB server 15. This notification of change in user information includes the addition server information and the relocation user information.

Subsequently, the subscriber information DB server 15 receives the change notification of user information and changes the subscriber information DB based on the change notification. That is, the subscriber information DB server 15 stores the user information of the user to be relocated to the newly added S-CSCF server 12. Finally, the subscriber information DB server 15 notifies completion of change. Then, the P-CSCF server 13 receives the completion of change, upon which the processing ends.

As such, for example, when receiving a SIP message from the terminal device 16 operated by the relocated user, the P-CSCF server 13 can transfer the SIP message to the newly activated S-CSCF server 12. As the result, the added S-CSCF server 12 can be rapidly put into use, loads of traffic can be distributed, and a rapid change in traffic demands can be responded.

### (Operation)

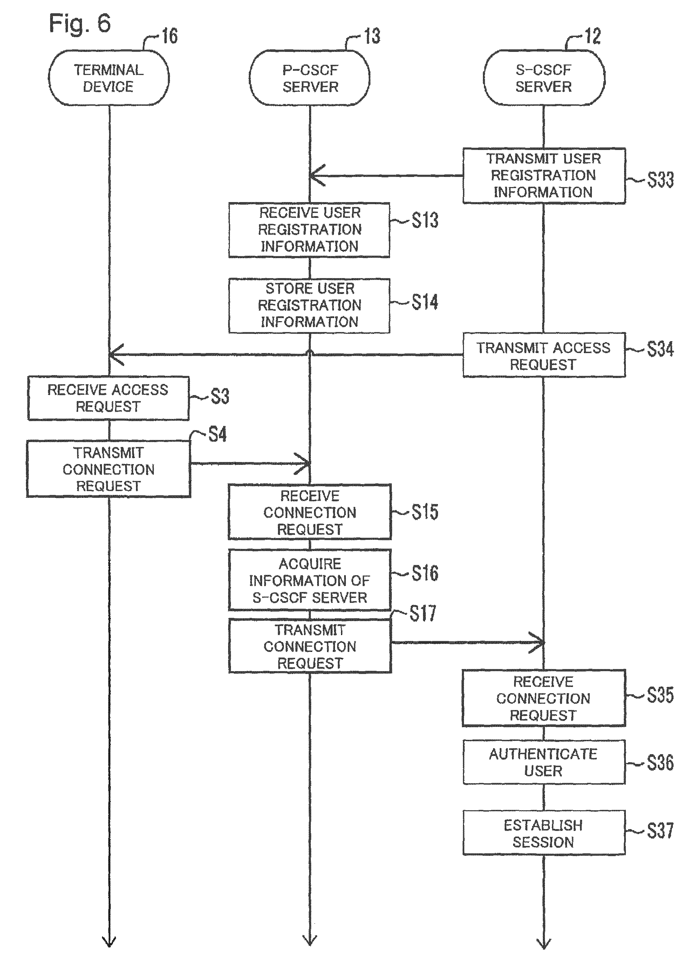

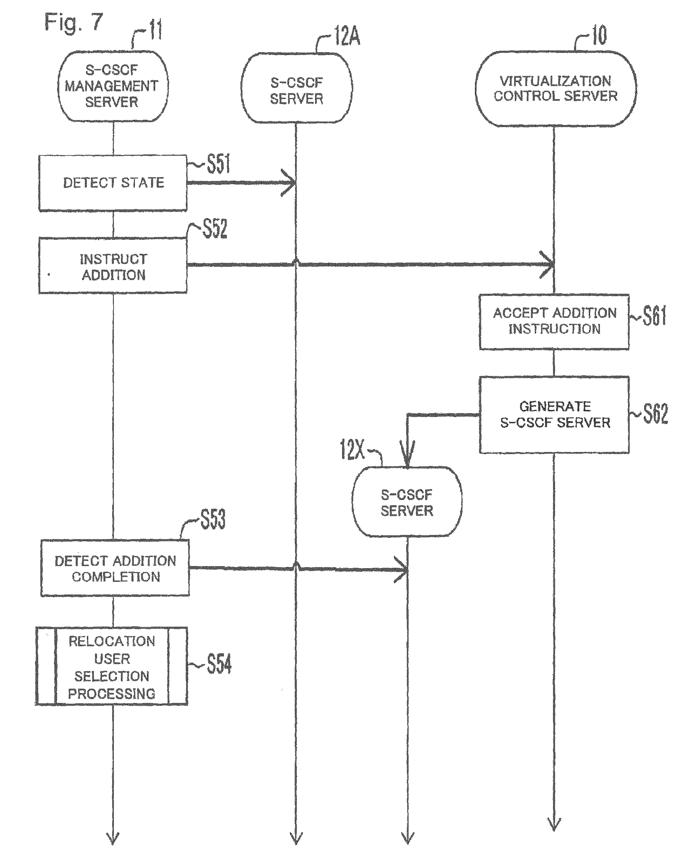

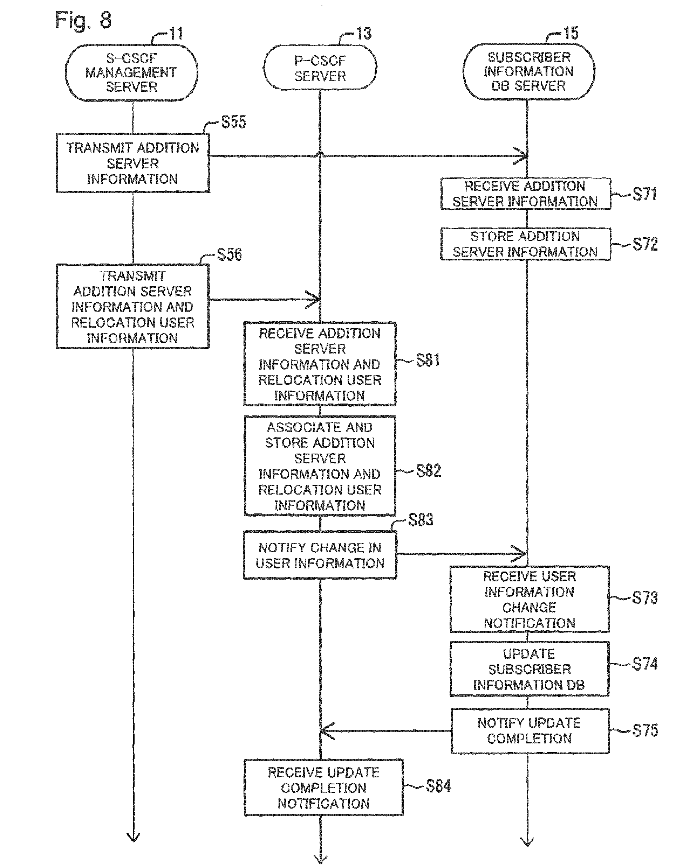

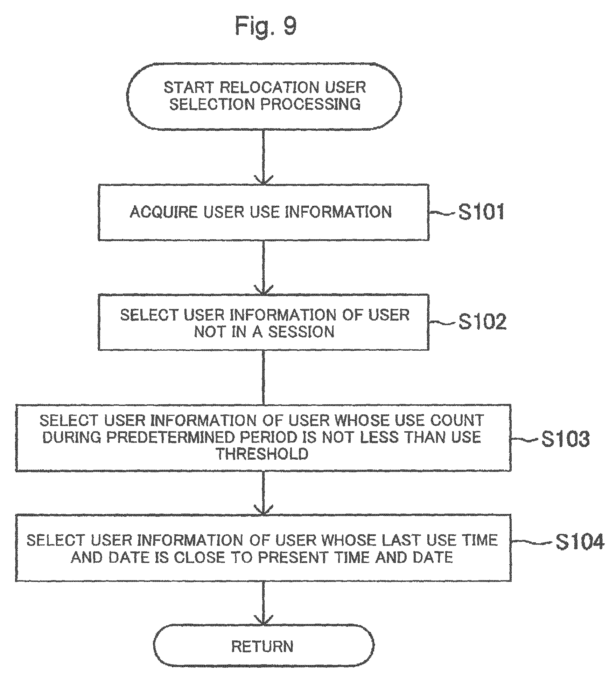

Next, with reference to Figs. 5 to 9, the operation of the information processing system 1 will be described. Fig. 5 is a sequence diagram for illustrating user registration processing. Fig. 6 is a sequence diagram for illustrating session establishment processing. Fig. 7 is a sequence diagram for illustrating user relocation processing. Fig. 8 is a sequence diagram for illustrating user relocation processing. Fig. 9 is a flowchart for illustrating relocation user selection processing.

First, with reference to Figs. 5 and 6, processing from registering a user until establishing a session will be described. First, a terminal device 16 acquires user information (step S1). The user information is, for example, a user ID for identifying a user who operates the terminal device 16, a password for authentication of the user, an IP address of the terminal device 16, and information that indicates the present position of the terminal device 16.

Subsequently, the terminal device 16 transmits a registration request that includes user information that was acquired in the processing of step S1 (step S2). The registration request is, for example, a SIP message, such as a REGISTER request message.

Next, the P-CSCF server 13 receives a registration request from the terminal device 16 in the processing of step S2 (step S11). Subsequently, the P-CSCF server 13 transmits the registration request that was received in the processing of step S11 to the I-CSCF server 14 (step S12). That is, the P-CSCF server 13 transfers the registration request that was received from the terminal device 16 to the I-CSCF server 14.

Subsequently, the I-CSCF server 14 receives the registration request that was transmitted in the processing of step S12 (step S21). Next, the I-CSCF server 14 transmits the user ID included in the registration request to the subscriber information DB server 15 (step S22). Receiving the user ID that was transmitted in the processing of step S22 (step S41), the subscriber information DB server 15 acquires information of the S-CSCF server 12 that is associated with the user ID (step S42). The information of the S-CSCF server 12 is, for example, a URL or the like for connecting with the S-CSCF server 12. Then, the subscriber information DB server 15 transmits the information of the S-CSCF server 12 that was acquired in the processing of step S42 to the I-CSCF server 14 (step S43).

Subsequently, the I-CSCF server 14 receives the information of the S-CSCF server 12 that was transmitted in the processing of step S43 (step S23). That is, the I-CSCF server 14 acquires information of the S-CSCF server 12 that is associated with the user ID. It should be noted that, if the I-CSCF server 14 could not acquire the information of the S-CSCF server 12 that is associated with the user ID in the processing of step S23, that is, the S-CSCF server 12 that is associated with the user ID is not stored in the subscriber information DB server 15, the I-CSCF server 14 selects a predetermined S-CSCF server 12 by a preset selection method. Then, the I-CSCF server 14 acquires information for connecting with the selected S-CSCF server 12.

Then, the I-CSCF server 14 transmits the registration request that was received in the processing of step S21 to the S-CSCF server 12 based on the information of the S-CSCF server 12 that was acquired in the processing of step S23 (step S24).

Subsequently, the S-CSCF server 12 receives the registration request that was transmitted in the processing of step S24 (step S31). Next, the S-CSCF server 12 registers the user (step S32). Specifically, the S-CSCF server 12 stores the information that indicates the S-CSCF server 12 itself and the user information in association with each other. Upon which the registration (re-registration) processing of the user completes. When the registration processing of the user completes, session establishment processing in response to a request from the user is performed. Further, if the user has already been registered, without performing the user registration processing of Fig. 5, only the session establishment processing of Fig. 6 is performed. The following will describe the session establishment processing with reference to Fig. 6.

First, the S-CSCF server 12 transmits the user registration information to the P-CSCF server 13 (step S33). Subsequently, the P-CSCF server 13 receives the user registration information that was transmitted in the processing of step S33 (step S13) and stores the user registration information (step S14). In this way, the P-CSCF server 13 can perform transfer processing between the terminal device 16 and the S-CSCF server 12.

Further, the S-CSCF server 12 transmits an access request to the terminal device 16 via the P-CSCF server 13 (step S34). Then, the terminal device 16 receives the access request that was transmitted in the processing of step S33 via the P-CSCF server 13 (step S3) and transmits a connection request (step S4). It should be noted that the terminal device 16 may re-transmit the registration request that was transmitted in the processing of step S2.

Subsequently, the P-CSCF server 13 receives the connection request that was transmitted in the processing of step S4 (step S15). Next, the P-CSCF server 13 acquires, from the storage unit of its own, information that indicates the S-CSCF server 12 that is associated with the user ID included in the connection request (step S16). Then, the P-CSCF server 13 transmits the connection request that was received at step S15 to the S-CSCF server 12 indicated by the information that was acquired in the processing of step S16 (step S17).

Next, the S-CSCF server 12 receives the connection request that was transmitted in the processing of step S17 (step S35) and authenticates the user based on the user information included in the received connection request (step S36). Then, if the user authentication is succeeded, the S-CSCF server 12 establishes a session (step S37). As such, when communicating with other terminal device 16, a user can use a communication service such as a predetermined application.

Next, with reference to Figs. 7 to 9, the following will describe processing of a case of adding a S-CSCF server 12. First, the S-CSCF management server 11 detects the state of the S-CSCF server 12 (for example, the S-CSCF server 12A) (step S51). The state of the S-CSCF server 12 is, for example, a load thereof. Then, the S-CSCF management server 11 determines whether or not the load value detected in the processing of step S51 is not less than a preset load threshold, and, if the value of the load is determined as not less than the load threshold, the S-CSCF management server 11 instructs addition of a S-CSCF server 12 to the virtualization control server 10 (step S52). It should be noted that, if the load value is less than the threshold, the processing returns to step S51.

Subsequently, the virtualization control server 10 receives the instruction of addition from the S-CSCF management server 11 (step S61) and generates (starts up) a new virtual S-CSCF server 12 (for example, the S-CSCF server 12X) (step S62).

When generation of a new S-CSCF server 12 has completed, the S-CSCF management server 11 detects completion of the addition (step S53). Here, the S-CSCF management server 11 acquires information that identifies the added S-CSCF server 12 as addition server information. Then, the S-CSCF management server 11 performs relocation user selection processing (step S54).

Here, with reference to Fig. 9, the following will describe the relocation user selection processing. In the relocation user selection processing of Fig. 9, first, the S-CSCF management server 11 acquires user use information (step S101). For example, the S-CSCF management server 11 acquires information of the use states (during a session or no session) of users who use the respective S-CSCF server 12, use counts, last use times and dates, and the like, as user use information.

Then, the S-CSCF management server 11 selects user information of users not in a session from among user use information that was acquired in the processing of step S101 (step S102). That is, the S-CSCF management server 11 selects user information of users whose use state is "no session" from among the user use information.

Subsequently, the S-CSCF management server 11 selects user information of users whose use count during a predetermined period is not less than a preset use threshold among user information selected in the processing of step S102 (step S103). Furthermore, the S-CSCF management server 11 selects user information of a user whose last use time and date of the service is close to the present time from among user information selected in the processing of step S103 (step S104). That is, the S-CSCF management server 11 acquires user information of a user to be relocated to the added S-CSCF server 12 as relocation user information. In this way, users registered in the respective S-CSCF servers 12 can be evenly allocated to the newly activated S-CSCF server 12X. After the processing of step S104, the processing proceeds to step S55 of Fig. 8.

Next, the S-CSCF management server 11 transmits addition server information that indicates the added S-CSCF server 12 to the subscriber information DB server 15 (step S55). When having received the addition server information that was transmitted in the processing of step S55 (step S71), the subscriber information DB server 15 stores information of the added S-CSCF server 12 (step S72). For example, the subscriber information DB server 15 stores the identification information of the added S-CSCF server 12X, allocates a user to the S-CSCF server 12X, and creates a new table for management.

Next, the S-CSCF management server 11 transmits the addition server information and relocation user information to the P-CSCF server 13 (step S56). When receiving the addition server information and relocation user information that was transmitted in the processing of step S56 (step S81), the P-CSCF server 13 stores the received addition server information and relocation user information in association with each other

(step S82). That is, the P-CSCF server 13 stores the user information of the user to be relocated in association with the information of the added S-CSCF server 12. Then, the P-CSCF server 13 notifies the change in user information to the subscriber information DB server 15 (step S83). This change notification of the user information includes the addition server information and the relocation server information.

Subsequently, the subscriber information DB server 15 receives the change notification of the user information (step S73) and updates (changes) the subscriber information DB based on the change notification (step S74). That is, the subscriber information DB server 15 stores the user information of the user to be relocated in association with the information of the added S-CSCF server 12. Then, the subscriber information DB server 15 notifies the completion of update (step S75). Finally, the P-CSCF server 13 receives the update completion notification (step S84), upon which the processing ends.

As such, for example, when having received a SIP message from a terminal device 16 operated by the relocated user, the P-CSCF server 13 can transfer the SIP message to the newly activated S-CSCF server 12. As the result, the added S-CSCF server 12 can be rapidly put into use, loads of traffic can be distributed, and a rapid change in traffic demands can be responded.

### <Second Exemplary Embodiment>

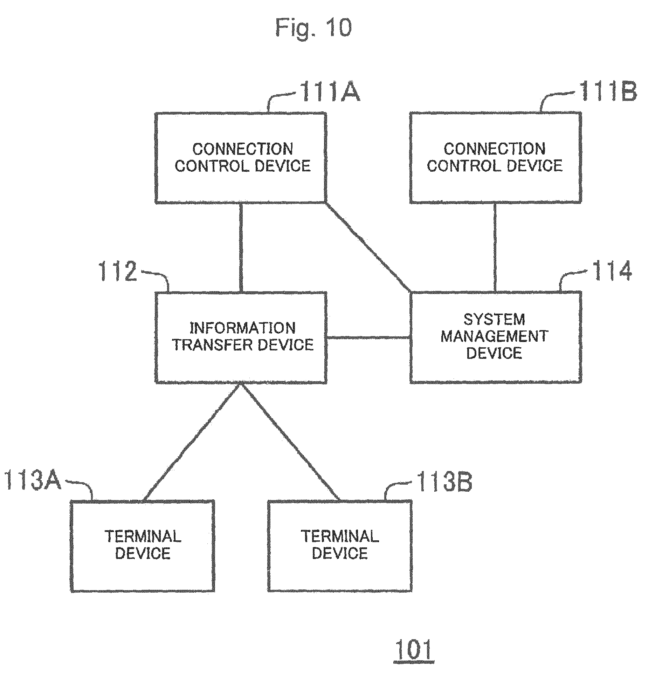

Next, the following will describe an information processing system 101 according to the second exemplary embodiment of the present invention with reference to Fig. 10.
The information processing system 101 according to the second exemplary embodiment includes:
a connection control device 111A that establishes a connection between terminal devices 113A, 113B;
an information transfer device 112 that receives connection request information from one of the terminal devices 113 A, 113B and transmits the received connection request information to a connection control device 111 that is associated in advance with user information of a user who operates the one terminal device 113A, 113B; and
a system management device 114 that detects addition of a connection control device 111B,
wherein, when having detected the addition of the connection control device 111B, the system management device 114 selects user information of a user to be associated with the added connection control device 111B based on a preset user selection condition and instructs the information transfer device 112 to store the selected user information and information of the added connection control device 111B in association with each other.

According to the above configuration, the system management device 114 detects completion of addition of the connection control device 111B, selects a user who uses the connection control device 111B based on the user selection condition, and notifies the user information of the selected user and the information of the added connection control device 111B to the information transfer device 112 so as to cause the information transfer device 112 to store the information. According to such a configuration, as the information transfer device 112 can transfer the connection request information from the terminal device 113 to the newly added connection control device 111B, the added connection control device 111 B can be rapidly put into use, and processing can be distributed to a plurality of connection control devices 111.

While the invention of the present application has been described so far with reference to the above-described exemplary embodiments, the invention of the present application is not limited to the above-described exemplary embodiments. A variety of modifications that will be understood by those skilled in the art can be made to the configuration and details of the invention of the present application within the scope thereof.

### <Supplementary notes>

The whole or part of the exemplary embodiments disclosed above can be described as, but not limited to, the following supplementary notes.

### (Supplementary note 1)

An information processing system including:
connection control devices, each of which establishes a connection between terminal devices;
an information transfer device that receives connection request information from one of the terminal devices and transmits the received connection request information to one of the connection control devices that is associated in advance with user information of a user who operates the one terminal device; and
a system management device that detects addition of the connection control device,
   wherein, when having detected the addition of the connection control device, the system management device selects user information of a user to be associated with the added connection control device based on a preset user selection condition and instructs the information transfer device to store the selected user information and information of the added connection control device in association with each other.

According to the above configuration, the system management device detects addition of a connection control device, selects user information of a user to use the connection control device based on a user selection condition, and notifies the selected user information and the information of the added connection control device to the information transfer device so as to cause the information transfer device to store the information. According to this, as the information transfer device can transfer connection request information from a terminal device to the newly added connection control device, the added connection control device can be rapidly put into use, processing can be distributed to a plurality of connection control devices, and a rapid change in traffic demands can be responded.

### (Supplementary note 2)

The information processing system according to Supplementary note 1,
wherein the system management device selects user information of a user who operates a terminal device, with which a connection with the connection control device is not currently established, based on the user selection condition.

According to the above configuration, for example, as the system management device selects user information of a user who is not currently using the service and allocates the user to the added connection control device, processing can be distributed to a plurality of connection control devices without interrupting provision of services.

### (Supplementary note 3)

The information processing system according to either Supplementary note 1 or 2,
wherein the system management device selects user information of a user whose connection count with the connection control device during a preset period is not less than a predetermined threshold based on the user selection condition.

According to the above configuration, as the system management device selects user information of a user with high use count, that is, a user with high probability of using the service, processing can be more efficiently distributed to a plurality of connection control devices.

### (Supplementary note 4)

The information processing system according to any one of Supplementary notes 1 to 3,
wherein the system management device selects user information of a user whose time and date of connection with the connection control device is within a preset predetermined range from the present time and date based on the user selection condition.

According to the above configuration, as the system management device selects user information of a user who used the service lately, that is, a user with high probability of using the service, processing can be more efficiently distributed to a plurality of connection control devices.

### (Supplementary note 5)

The information processing system according to any one of Supplementary notes 1 to 4,
wherein the system management device detects a preset state of the connection control device and instructs addition of the connection control device according to the state.

According to the above configuration, as the system management device instructs addition of the connection control device, for example, when the state of the connection control device changes, the configuration can be flexibly changed in response to a rapid change in traffic demands.

### (Supplementary note 6)

The information processing system according to Supplementary note 5,
wherein the system management device detects the load of the connection control device as the state of the connection control device, and, when the load is not less than a preset load threshold, instructs addition of the connection control device.

According to the above configuration, as the system management device instructs addition of the connection control device when the load of the connection control device is not less than a predetermined load threshold, the risk of interruption of provision of services due to increased loads of the connection control device can be decreased, which more certainly ensures provision of services desired by a user.

### (Supplementary note 7)

An information processing method, in an information processing system including:
connection control devices, each of which establishes a connection between terminal devices;
an information transfer device that receives connection request information from one of the terminal devices and transmits the received connection request information to one of the connection control devices that is associated in advance with user information of a user who operates the one terminal device; and
a system management device that detects addition of the connection control device,
wherein, when having detected the addition of the connection control device, the system management device selects user information of a user to be associated with the added connection control device based on a preset user selection condition and instructs the information transfer device to store the selected user information and information of the added connection control device in association with each other.

### (Supplementary note 8)

An information processing device including:
system management means that detects addition of a connection control device that establishes a connection between terminal devices,
wherein, when having detected the addition of the connection control device, the system management means selects user information of a user to be associated with the added connection control device based on a preset user selection condition and instructs an information transfer device, which transfers information between the terminal devices and the connection control device, to store the selected user information and information of the added connection control device in association with each other.

### (Supplementary note 9)

An information processing method including: when addition of a connection control device that establishes a connection between terminal devices has been detected, selecting user information of a user to be associated with the added connection control device based on a preset user selection condition and instructing an information transfer device, which transfers information between the terminal devices and the connection control device, to store the selected user information and information of the added connection control device in association with each other.

### (Supplementary note 10)

A program for causing an information processing device to: realize system management means that detects addition of a connection control device that establishes a connection between terminal devices, wherein, when having detected addition of the connection control device, the system management means selects user information of a user to be associated with the added connection control device based on a preset user selection condition and instructs an information transfer device, which transfers information between the terminal devices and the connection control device, to store the selected user information and information of the added connection control device in association with each other.

It should be noted that the program described in the above-described exemplary embodiments and Supplementary notes is stored in a storage device or a computer-readable recording medium. For example, the recording medium is a portable medium, such as a flexible disc, an optical disc, a magneto-optical disc, and a semiconductor memory.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

It should be noted that the present invention shall benefit the advantage of the priority right based on the patent application of Japanese Patent Application No. 2013-066709 filed on March 27, 2013, in Japan, and the contents described in the patent application shall be included by its entirety herein.

### Reference Signs List

- 1: INFORMATION PROCESSING SYSTEM
- 10: VIRTUALIZATION CONTROL SERVER
- 11: S-CSCF MANAGEMENT SERVER
- 12: S-CSCF SERVER
- 13: P-CSCF SERVER
- 14: I-CSCF SERVER
- 15: SUBSCRIBER INFORMATION DB SERVER
- 16: TERMINAL DEVICE
- 101: INFORMATION PROCESSING SYSTEM
- 111: CONNECTION CONTROL DEVICE
- 112: INFORMATION TRANSFER DEVICE
- 113: TERMINAL DEVICE
- 114: SYSTEM MANAGEMENT DEVICE

## Claims

1. An information processing system comprising:
connection control devices, each of which establishes a connection between terminal devices;
an information transfer device that receives connection request information from one of the terminal devices and transmits the received connection request information to one of the connection control devices that is associated in advance with user information of a user who operates the one terminal device; and
a system management device that detects addition of the connection control device,
wherein, when having detected the addition of the connection control device, the system management device selects user information of a user to be associated with the added connection control device based on a preset user selection condition and instructs the information transfer device to store the selected user information and information of the added connection control device in association with each other.

2. The information processing system according to Claim 1, wherein the system management device selects user information of a user who operates a terminal device, with which a connection with the connection control device is not currently established, based on the user selection condition.

3. The information processing system according to either Claim 1 or 2, wherein the system management device selects user information of a user whose connection count with the connection control device during a preset period is not less than a predetermined threshold based on the user selection condition.

4. The information processing system according to any one of Claims 1 to 3,
wherein the system management device selects user information of a user whose time and date of connection with the connection control device is within a preset predetermined range from the present time and date based on the user selection condition.

5. The information processing system according to any one of Claims 1 to 4,
wherein the system management device detects a preset state of the connection control device and instructs addition of the connection control device according to the state.

6. The information processing system according to Claim 5,
wherein the system management device detects a load of the connection control device as the state of the connection control device, and, when the load is not less than a preset load threshold, instructs addition of the connection control device.

7. An information processing method, in an information processing system comprising:
connection control devices, each of which establishes a connection between terminal devices;
an information transfer device that receives connection request information from one of the terminal devices and transmits the received connection request information to one of the connection control devices that is associated in advance with user information of a user who operates the one terminal device; and
a system management device that detects addition of the connection control device,
wherein, when having detected the addition of the connection control device, the system management device selects user information of a user to be associated with the added connection control device based on a preset user selection condition and instructs the information transfer device to store the selected user information and information of the added connection control device in association with each other.

8. An information processing device comprising:
system management means that detects addition of a connection control device that establishes a connection between terminal devices, wherein, when having detected the addition of the connection control device, the system management means selects user information of a user to be associated with the added connection control device based on a preset user selection condition and instructs an information transfer device, which transfers information between the terminal devices and the connection control device, to store the selected user information and information of the added connection control device in association with each other.

9. An information processing method comprising:
when addition of a connection control device that establishes a connection between terminal devices has been detected, selecting user information of a user to be associated with the added connection control device based on a preset user selection condition, and
instructing an information transfer device, which transfers information between the terminal devices and the connection control device, to store the selected user information and information of the added connection control device in association with each other.

10. A program for causing an information processing device to:
realize system management means that detects addition of a connection control device that establishes a connection between terminal devices,
wherein, when having detected the addition of the connection control device, the system management means selects user information of a user to be associated with the added connection control device based on a preset user selection condition and instructs an information transfer device, which transfers information between the terminal devices and the connection control device, to store the selected user information and information of the added connection control device in association with each other.
